# EUROPEAN PATENT SPECIFICATION

(11) **EP 0 790 925 B1**
(45) Date of publication and mention of the grant of the patent: **08.07.1998**
(21) Application number: 95902335.9
(22) Date of filing: 07.11.1994
(51) Int. Cl.: B64F 1/28

(54) **REFUELLING SYSTEM**
BETANKUNGSANLAGE
SYSTEME DE RAVITAILLEMENT EN CARBURANT

(43) Date of publication of application: 27.08.1997
(73) Proprietor: S.I.F.T. sas DI CUTORE G & PITOTTI G., 00040 Montecompatri (Roma) (IT)
(72) Inventor:
(74) Representative: Ferguson, Alexander
(86) International application number: NL9400274
(87) International publication number: WO9614244

(56) References cited:
- EP-A- 0 291 876
- WO-A-94/00348
- WO-A-94/01327
- US-A- 4 275 860
- US-A- 4 988 020

## Description

This invention relates to a refuelling system for motorized vehicles such as aircrafts, as described in the preamble of claim 1.

Up to now, aircraft refuelling has been carried out by means of mobile refuellers, carrying fuel, pumping and filtering components and means for measuring and transferring fuel to the aircraft. These mobile refuellers are loaded at the airport terminal plants and deliver the fuel to the aircraft in refuelling areas by means of flexible hoses.

According to another known system, use is being made of mobile refuellers, carrying filtering components and means for measuring and transferring the fuel to the aircraft in refuelling areas, wherein the fuel is pumped to the refuellers through flexible hoses by hydrant fuelling systems, fed by the airport terminal plants.

Another refuelling sytem, which is of the type described in the preamble is known from e.g. International patent application WO 91/00214 and usually comprises a plurality of tanks, and a plurality of delivery stations spaced from each other and from the tanks, the tanks and the delivery stations being connected with each other through fuel lines, which pass through a central pumping and metering unit which is provided with control means, as are the delivery stations. Such a system can be used at an aiport, a bus-station, even a pit for formula racing cars, to be short in any station which is frequented by vehicles having combustion engines.

These known refuelling systems are accommodated in the ground and are at least partially covered by a paving, the pumping and metering unit and the delivery stations being raisable and lowerable out of (to some extent) and into the ground upon command. The other components of the system such as the tanks are permanently arranged in the ground, as are the support structures for the pumping and metering unit and for the delivery stations.

Up to now, mobile refuellers, dispensers, fixed refuellers and aiport terminal plants have been designed and implemented, for historical reasons, on the basis of different technical approaches, although comprising identical components and accessories and having the same function of aircraft refuelling. The known refuelling system is usually composed of components of various dimensions, which are supplied separately, using separate transporting means of different kinds.

A refuelling system such as described in the preamble of claim 1 is known from UK patent application 2.049.570. This known refuelling system comprises one or more tanks and a combined pumping, delivery and decanting plant. The tanks are arranged in a robust protective, open frame having the dimensions of a container. The plant is incorporated in one of the tanks and thus also arranged in such a frame. The plant is connected to the adjacent tank by the inlet of its pump, the other tanks being connected in series with each other and the former tank.

Nowadays, there is an increasing need for refuelling systems which are easily and quickly adaptable to changing demands and which are versatile.

It is an object of the present invention to provide a refuelling system which can cope with the demands of the present day.

It is a further object of the invention to provide a refuelling system which is easily transportable and installable.

It is yet another object of the invention to provide a refuelling system which can easily be removed and subsequently be used in various lay-outs and on different locations.

It is an object of the invention to provide a refuelling system of which the major constituting parts can be used in another subsequent system, located at a considerable distance.

These and other objects are achieved by a refuelling system according to the accompanying claims.

According to the invention there is provided a refuelling system in which said containers each have a circumferential wall and preferably a closed bottom and have dimensions conforming to ISO standards.

Due to this arrangement, in which the container walls have an additional function, the system can be placed into the ground without any additional measures needed to be taken to keep the backfill (soil or concrete) at a distance from the elements of the system, i.e. the tanks, the pumping and metering unit and the metering and delivery means. Moreover, in the system of the invention the elements placed in the containers remain accessible for various purposes such as inspection of the fuel connection, whether or not the system is placed into the ground.

According to the invention described in the claims main components, i.e. the tank or the tanks, the central pumping and metering unit and/or the delivery means can be easily assembled, modified, installed, transferred and stored. If the main components of the system are urgently needed elsewhere, they can easily be removed and transferred to their future destination.

The system is preferably installed in the ground. If the surrounding soil is sufficiently stable, the container can be placed with a clearance in an excavation having larger dimensions than the container itself. If the main system components are to be removed one can simply hoist the container out of the excavation, after having removed a covering of earth or concrete slabs, and load them onto trucks for transportation.

If, however, the soil is not sufficiently stable, additional measures have to be taken. In that case, the gap between the vertical walls of the container and the excavation are filled with concrete. The walls of the container then serve as a form wall, the components in the container being kept free from hydrostatic pressures of the poured concrete.

When the components have to be removed, the covering layer, e.g. soil or a concrete slab floor, is taken away and the components are disconnected (if necessary) from the container frame and hoisted out of the container and placed on trucks, preferably on trucks on which similar containers have already been placed. In this case use is preferably made of containers having an open top, both in the ground and on the truck. The main system components mentioned above are then advantageously provided with brackets on their upper side with which they can find support on the upper frame of their respective containers. The connection bracket - upper frame may comprise securing means, which are easily and quickly operable from above to disconnect the bracket from the container.

If the local groundwater level is so high that there would be a risk that the containers/components would be raised by hydrostatic pressures, the weight of these parts can be increased by the covering, in particular by using a paving of concrete slabs.

If, alternatively, the said main components of the refuelling system are accommodated in containers placed on trucks during the functioning of the system, the container with the tank and the container with the pumping unit are connected with each other by flexible quick connect coupling hoses and by quick connect coupling control lines, such as electric cables, when they are positioned on the truck. A power source is included in one of said containers for providing energy necessary for operation of the system. If fuel is to be delivered at just one location, the container with the unit may also accommodate the delivery means. If delivery has to take place at various locations, containers accommodating the several delivery means are stored on trucks which are positioned at a distance from the former truck and are connected thereto by flexible quick connect coupling hoses and electric quick connect coupling cables or the like.

The invention will now be described with reference to the preferred embodiments shown in the attached drawings, in which:
Figures 1A and 1B show schematic views on the main components of the refuelling system of the invention, in its installed position and during removal, respectively;
Figures 2A and 2B show schematic views corresponding to figures 1A and 1B of an alternative embodiment of the refuelling system of the invention;
Figures 3A, 3B and 3C show vertically longitudinal, horizontally longitudinal and vertical cross sections, respectively, of the tank container of the refuelling system of figures 1 and 2;
Figure 4A shows a detail of the connection between container frame and tank bracket;
Figures 4B and 4C schematically show details of the bracket of the tank;
Figure 5 shows a tank just lifted out of its container;
Figures 6A, 6B and 6C show a vertical longitudinal section, a vertical cross section and a top view, respectively, of a container accommodating the pumping and metering unit;
Figure 6D is a vertical cross-section of the container of figures 6A-6C, during use; and
Figure 7 shows a truck onto which the tank container and the pumping and metering unit container are placed, for use in a further alternative embodiment of the refuelling system of the invention.

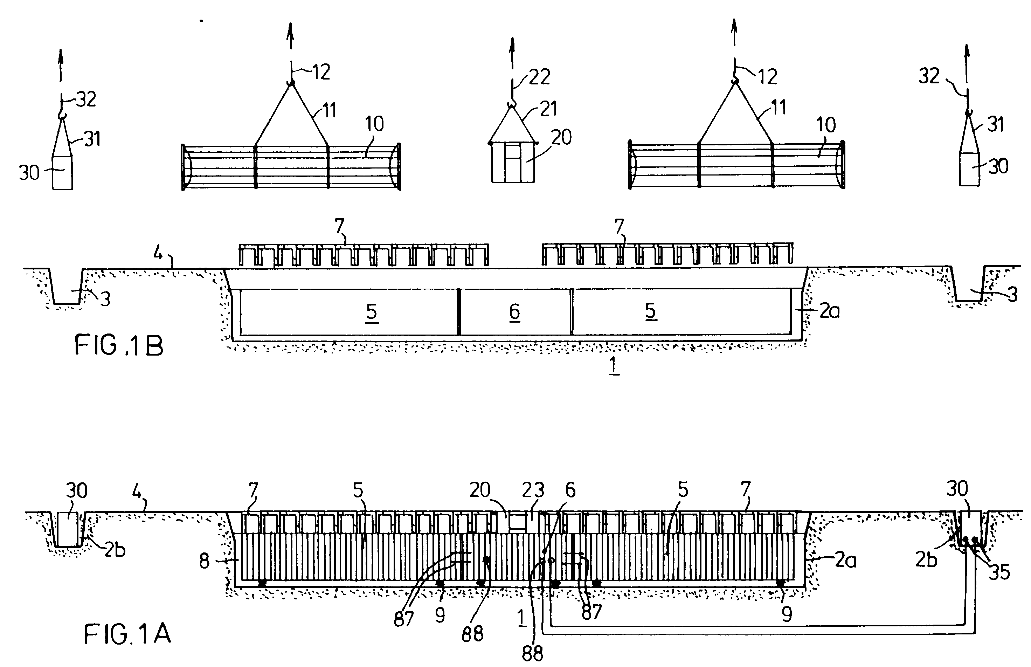

In figure 1A a first embodiment of the refuelling system according to the invention is shown installed and hidden away in the ground 1. In the ground 1 excavations 2a and 2b have been made. In the excavation 2a a container 6 accommodating a central pumping, filtering and metering unit 20 is positioned between two containers 5, each accommodating a fuel tank 10 and having an open top. The containers 5 and 6 are supported on bearing blocks 9 placed on the bottom of the excavation 2a. The tanks 10, unit 20 and delivery stations 30 are connected to each other by fuel hoses and electric cables, which are attached thereto by quick connect couplings, which are well known per se. For connection purposes, container 6 is provided with passages 87 for direct lines to container 5 (passages 90) and with passage 88 for lines (laid in the soil) to container 30, provided with line passages 35. A power source is included in unit 20, if necessary.

The gap between the containers 5 on the one hand and the walls of the excavation on the other hand, is filled with concrete, poured in situ after the containers have been placed in the excavation 2a. After the concrete has set, the containers 5 and 6 will be fixed in position in the ground 1. The concrete increases the weight of the containers so that they will be less easily lifted by the pressure of the groundwater. The concrete moreover forms a shield against leakage of fuel from the tank or unit into the ground. On top of containers 5, 6 a (partial) cover composed of a series of concrete beams or slabs is positioned to provide a surface which is flush with the ground level 4 and to withstand any excessive buoyancy resulting from hydrostatic pressure. In the centre, the pumping and metering unit 20 has been raised from its container 6 to some extent to align with the upper surface of slabs 7. For this purpose, the unit is supported on a plurality of mechanical jacks, the lower ends of which are attached to the container floor. An upper portion 23 of unit 20 contains a lid and a control panel, which can be moved up by means of hydraulic means in the unit to become projected from the unit and from the ground level to be exposed to the operator and to be moved down again after use. The hydraulic means are operable by remote control.

At a distance from the containers 5 and 6 a plurality of fuel dispensers 30 have been placed in excavations 2b, after which the soil is back-filled. These fuel dispensers 30 can also be accommodated in ISO containers, if the space available renders this possible. The dispenser 30 is provided with means operated by remote control for raising and lowering its control panel and fuel delivery parts.

If the components 10 and 20 have to be removed (figure lB), the slabs 7 are taken away by any suitable means and the tanks 10 and the unit 20 are uncoupled from the frames of their containers 5 and 6, respectively, and disconnected from their connecting lines for fuel and electricity and furthermore connected to hoisting lines 11, 12 and 21, 22, respectively, in order to be hoisted out of their containers and to be placed on a truck, on the loading floor thereof, or into a similar open top container which has already been placed on a truck. In the latter case, that container can be advantageously used for installation of a new refuelling system at another location.

At the same time, the dispenser 30 is taken out of the ground by hoisting lines 31, 32 and delivered onto another truck.

For installation and transport purposes, the containers 5 and 6 may be provided with mechanical jacks arranged in their interior, at the corners, in order to raise a container from the ground level to enable a truck floor to be positioned beneath the container and to take over the weight of the container, after which the jacks are once more retracted into the container and the truck plus container can move to the installation site.

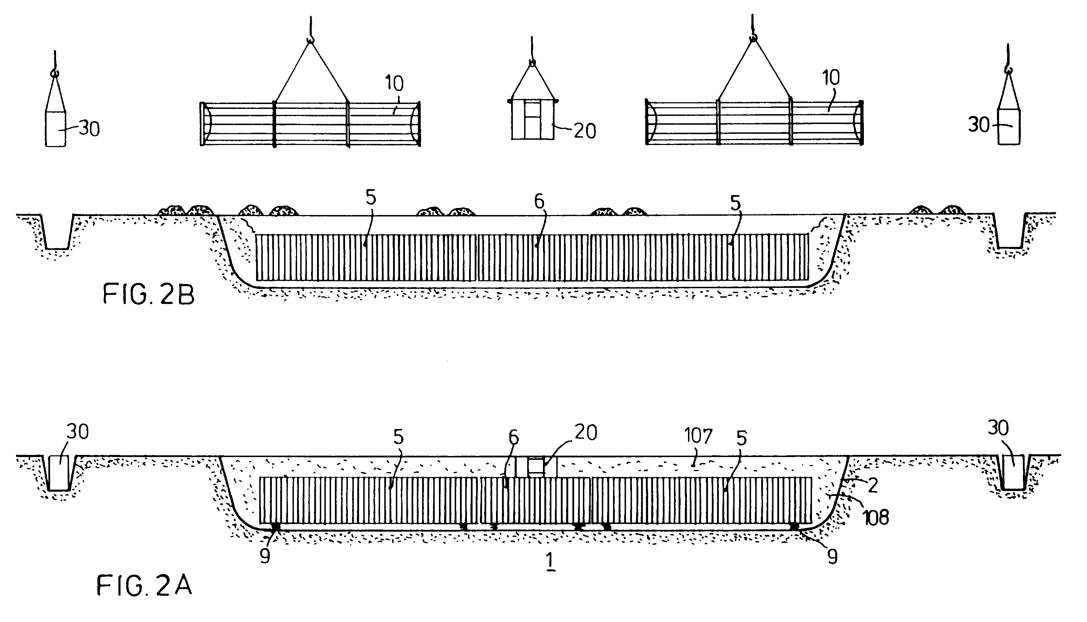

The system depicted in figure 2A substantially corresponds to the system of figure 1A. The groundwater level is somewhat lower, so that the slabs can be replaced by an earth covering and the concrete filling is replaced by earth back-fill. In this case, the containers 5, 6 would be removable, e.g. after having been installed for just several days. It might, however, be more appropriate under certain circumstances to arrange the tanks 10 and the unit 20 removably in their containers if, for any reason whatsoever, the speed of the removing operation is given priority. In other aspects, the same explanation can be given here as has been given for figures 1A and 1B.

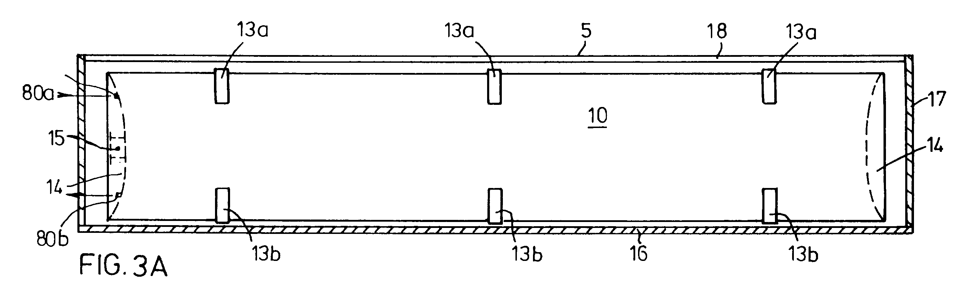

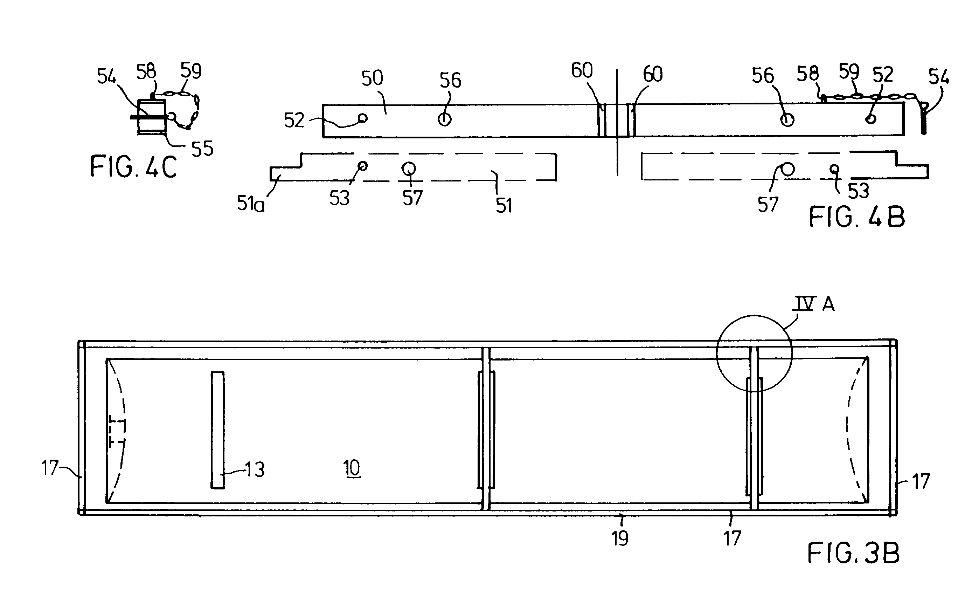

The container 5 is shown more clearly in figures 3A-3C. As can be seen, the container 5, which is a 40 ft. ISO container, has a bottom 16, side walls 17 and an open top 18. A tank 10 has a cylindrical shape with concave ends 14, on one of which a manhole 15 is provided to allow for inspection of the inside of the tank, if necessary. The manhole 15 will be located near the container wall proximate to the container 6, passage means being provided in the adjacent side walls of containers 5 and 6 at that location. At the same end, the tank 10 is provided with outlet and inlet connections 80a, 80b for fuel hoses connecting to the unit 20, through which fuel can be passed from an outer fuel source or storage means, through the unit, to the tanks to fill them, or fuel can be passed from the tank to the unit and subsequently to a delivery station.

The tank 5 is provided with upper brackets 13a and lower brackets 13b which are welded to the tank and are interspaced in the direction of the main axis of the tank. Brackets 13b serve to loosely support or bear the tank 5 on the bottom 16, while brackets 13a serve to support a positioning sliding beam and to connect the tank to a hoisting appliance.

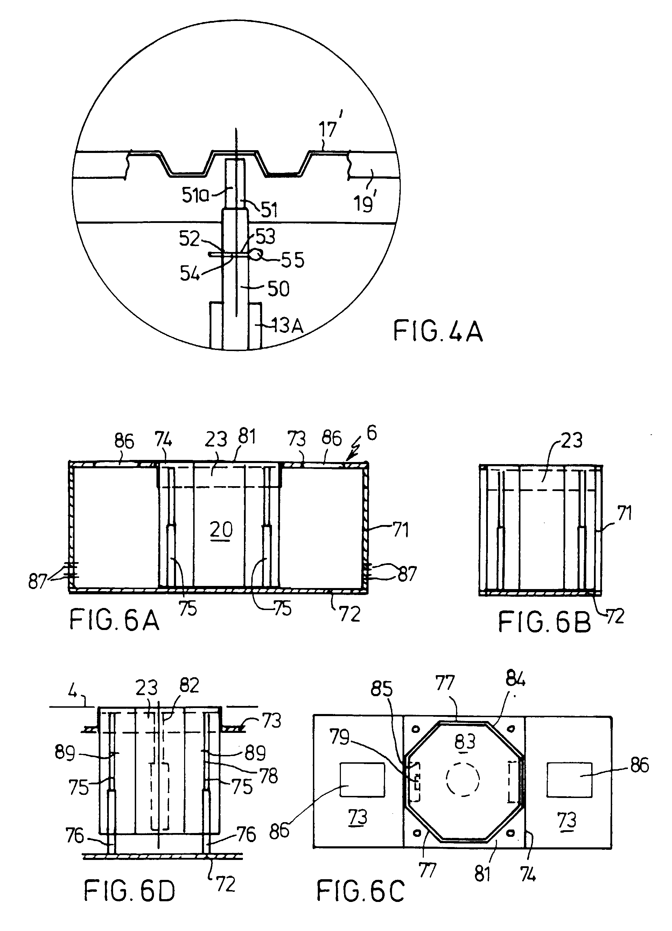

As can be seen more clearly in figures 4A and 4B, a sleeve 50 having a square cross-section is secured to the upper side of bracket 13a. On either extremity of the sleeve 50 a sliding bar 51 is slidable in and out of the open ends of the sleeve 50. In the extracted position, end projection 51a extends upto below longitudinal upper frame beam 19 and into a recess of the zig-zag trapezoidal sheet 17' which actually forms the side wall 17 of the container. The contact between projection 51a and beam 19 prevents the tank 10 from being lifted relative to the container 5 due to hydrostatic forces, in case the container itself is fixed into the ground or ballasted. The engagement of projection 51a into the recess in wall 17 ensures a proper positioning of the tank in axial direction, which is advantageous during transport and handling of the container, before installation of the system and afterwards, in case the container and the tank are removed simultaneously.

The extracted position of sliding beam 51 can be temporarily secured by means of pins or cotter pins 54, which are to be inserted into holes 52 in sleeve 50 and into hole 53 in beam 51, which is aligned with holes 52. Each cotter pin 54 is provided with an eye 55, to which one end of a chain 59 is connected, the other end of which is fastened to sleeve 50 at location 58.

As can be deduced from figure 4B, the sliding beams 51 can be slid inwardly into sleeve 50 until they abut stops 60.

In that retracted position, the projections 51a are inside the outer ends of the sleeve 50, and the tank 5 will be ready for removal by hoisting. The hoisting holes 56 in sleeve 50 and hoisting holes 57 in sliding beam 51 will then be aligned and ready to receive any suitable hoisting means, such as a hoisting hook or cable (not depicted).

Before hoisting is started, an operator has descended into the container 5 from above to disconnect the couplings at connections 80a, 80b.

Then the sleeve/beam 50/51 and brackets 13a and therewith the tank 10 can be hoisted to be displaced from the inside of the container 5 to a truck.

Figures 6A-6D show some particulars of the container 6 and the unit 20 accommodated therein. The container 6 is a 20 ft. ISO-container. The container 6 has a bottom wall 72, side walls 71, into which the passages 87 are made, and a top wall 73, which has an aperture 74, into which a top plate 81 of pumping, metering and filtering unit 20 fits. The unit 20 is provided with a plurality of vertically extending jack assemblies 75 of which the upper ends are attached to the plate 81. The lower ends of these jack assemblies 75 are attached by welding or bolts to the upper surface of bottom 72. Due to this arrangement, the unit 20 will not be lifted relative to the container as a consequence of hydrostatic pressure forces of the groundwater. During installation, the unit 20 will be lifted by extending the jacks 75 until the plate 81 has come at a level flush with the ground level 4 (figure 6D). As previously mentioned, unit portion 23 is provided with a control panel which can be exposed to the operator by activating a hydraulic piston-cylinder assembly 82 which is arranged in the unit and bears with its lower end on the bottom of unit 20 and is connected with its upper end to a cover plate 83, which forms part of portion 23.

Extension of the piston rod ensures that the portion 23 will exit almost completely above the ground during refuelling operations. Thereafter, the rod can be retracted again and the cover plate 83 will be fitted into aperture 84 in plate 81.

As can be seen in the top view on the container 6 in figure 6C, the cover plate 83 of unit portion 23 is octagonal, which shape corresponds to the shape of the unit 20, which has eight wall segments 78. The polygonal cross section of unit 20 is advantageous for coupling purposes, since in that case it will be easy to provide recessed wall portions or niches 85, in which the quick couplings 79 can be located. These couplings, which are relatively vulnerable and expensive, will then be protected from damage during handling of the unit. After installation. the couplings 79 are connected with fuel lines to tanks and to remote delivery stations and with electric control lines.

If the unit 20 has to be removed, an operator descends into the container 6 through one of the doors 86 in the top wall 73 and uncouples the connections of all fuel lines and furthermore the control lines with the quick couplings 79. Then he will loosen the bolts on the lower parts 76 of jacks 75, if such a connection is used. Upon removal, the lower supporting parts 76 of jacks 75 will simply be lifted free from bottom 72 of container 6. If the lower parts 76 are welded to the bottom 72, the extension rods 78 of the jacks are uncoupled from the bases of the jacks 75 by removing the securing pins 89 which kept the rods in their extended position after installation, so that these rods will follow the movement of the plate 81. Subsequently, the operator leaves the container 6 and a hoisting means is attached to the upper portion 23 by suitable means (not shown), and the unit 20 is hoisted through aperture 74.

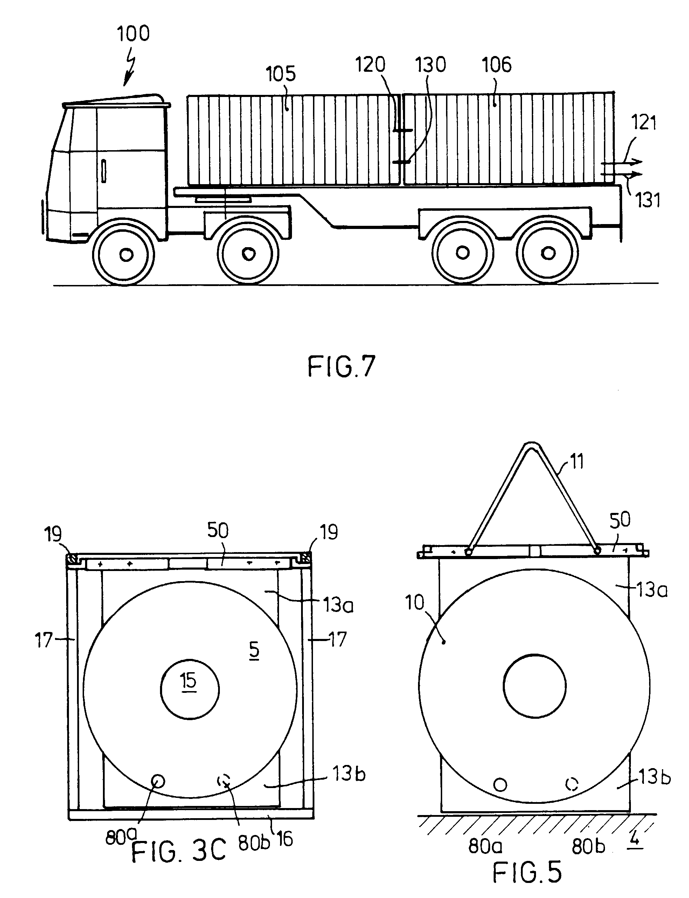

In figure 7 two main parts of the refuelling sytem of the invention are shown, i.e. the tank and the unit, accommodated in containers 105 and 106, which are placed on a truck 100. The containers 105 and 106 and therewith the tank and the unit are connected for fuel communnication by connecting line 120 and by electric control line 130, both being quickly disconnectable. Container 106 also accommodates a delivery terminal, which is connected with the unit. At the rear end of the truck, container 106 is provided with a door and with connecting couplings 121 for a fuel delivery line to an aircraft.

## Claims

1. Refuelling system for motorized vehicles such as aircrafts, comprising at least one fuel storage tank (10), a pumping and metering unit (20) and at least one fuel metering and delivery means (30), wherein the pumping and metering unit is in fuel communication with said at least one tank and said metering and delivery means, said system further comprising control means for controlling the fuel stream from the tank to said delivery means and from said delivery means to the vehicle, wherein said tank and/or pumping and metering unit and/or metering and delivery means are accommodated in respective containers (5; 6), **characterized in that** said containers (5; 6)each have a circumferential wall (17; 71) and preferably a closed bottom (16; 72) and have dimensions conforming to the ISO standards.

2. Refuelling system according to claim 1, wherein said tank (10) and/or pumping and metering unit (20) and/or metering and delivery means (30) are removable from said respective container (5; 6), preferably from above.

3. Refuelling system according to claim 1 or 2, wherein said system is accommodated into the ground (1).

4. Refuelling system according to claim 1 and 3, wherein said tank (10) and/or pumping and metering unit (20) and/or metering and delivery means (30) are arranged in a manner in which they are removable from the ground (1).

5. Refuelling system according to claim 4, wherein said tank (10) and/or pumping and metering unit (20) and/or metering and delivery means (30) are removable from said respective container (5; 6), preferably from above.

6. Refuelling system according to claim 4 or 5, wherein said respective container (5; 6) is removably arranged in the ground (1).

7. Refuelling system according to claim 4, 5 or 6, wherein said respective container (5; 6) is horizontally separated from the surrounding ground by a gap, preferably a peripheral gap.

8. Refuelling system according to claim 4, 5 or 6, wherein said respective container (5; 6) is surrounded by concrete (2a) poured in a gap between the vertical walls (17; 71) of the container and the ground (1).

9. Refuelling system according to claim 7 or 8, wherein said container (5; 6) is covered by a removable paving, preferably a concrete slab paving (7) .

10. Refuelling system according to claim 8, wherein said container (5; 6) is covered by ground material (107) .

11. Refuelling system according to any one of the claims 2-10, wherein said container is provided with disconnectable connectors (80a, 80b) for establishing a fuel connection between the tank (10) and /or the pumping and metering unit (20) and the delivery means (30) through disconnectable connection to fuel lines extending therebetween.

12. Refuelling system according to claim 2, wherein said container (105; 106) is arranged on a truck (100), and wherein preferably a container (105) accommodating a tank and a container (106) accommodating a pumping and metering unit and a delivery means are arranged on a truck (100).

13. Refueling system according to claim 12, wherein said metering and delivery means is accommodated in a separate container having dimensions conforming to the ISO standards, preferably arranged on a separate truck.

14. Refuelling system according to any one of the preceding claims, wherein said pumping and metering unit has a polygonal circumferential wall (77) in which quick connect coupling means (79) for connection to fuel lines and control lines are provided, said connector means (79) being preferably arranged inside the chords (78) of the polygone, more preferably in niches (85) formed in the chords of the polygone.

## Patentansprüche

1. Betankungsanlage für motorisierte Fahrzeuge wie Flugzeuge, mit mindestens einem Kraftstofflagertank (10), einer Pump- und Dosiereinheit (20) und mindestens einem Kraftstoffdosier- und Abgabemittel (30), in welcher die Pump- und Dosiereinheit in Kraftstoffverbindung mit dem mindestens einen Tank und dem Dosier- und Abgabemittel ist, wobei die Anlage weiterhin Steuermittel für das Steuern des Kraftstoffflusses vom Container zu den Abgabemitteln und von den Abgabemitteln zum Fahrzeug hat, in welcher der Tank und/oder die Pump- und Dosiereinheit und/oder das Dosier- und Abgabemittel in jeweiligen Containern (5; 6) aufgenommen sind, **dadurch gekennzeichnet**, daß die Container (5; 6) jeder eine umlaufende Wand (17; 71) und vorzugsweise eine geschlossene Unterseite (16; 72) und Abmessungen gemäß der ISO Norm haben.

2. Betankungsanlage nach Anspruch 1, in welcher der Tank (10) und/oder die Pump- und Dosiereinheit (20) und/oder das Dosier- und Abgabemittel (30) aus dem jeweiligen Container (5; 6) entfernbar sind, vorzugsweise von oben aus.

3. Betankungsanlage nach Anspruch 1 oder 2, in welcher die Anlage im Boden (1) aufgenommen ist.

4. Betankungsanlage nach Anspruch 1 und 3, in welcher der Tank (10) und/oder die Pump- und Dosiereinheit (20) und/oder das Dosier- und Abgabemittel (30) derart aufgestellt sind, daß sie aus dem Boden (1) entfernbar sind.

5. Betankungsanlage nach Anspruch 4, in welcher der Tank (10) und/oder die Pump- und Dosiereinheit (20) und/oder das Dosier- und Abgabemittel (30) aus dem jeweiligen Container (5; 6) entfernbar sind, vorzugsweise von oben aus.

6. Betankungsanlage nach Anspruch 4 und 5, in welcher der jeweilige Container (5; 6) im Boden (1) entfernbar aufgestellt ist.

7. Betankungsanlage nach Anspruch 4, 5 oder 6, in welcher der jeweilige Container (5; 6) durch einen Spalt, vorzugsweise einen Randspalt, horizontal von dem umgebenden Boden geschieden ist.

8. Betankungsanlage nach Anspruch 4, 5 oder 6, in welcher der jeweilige Container (5; 6) von in einem Spalt zwischen den vertikalen Wänden (17; 71) des Containers und dem Boden (1) eingebrachtem Beton (2a) umgeben ist.

9. Betankungsanlage nach Anspruch 7 oder 8, in welcher der jeweilige Container (5; 6) mit einem entfernbarem Belag, vorzugsweise einem Betonfliesenbelag (7), bedeckt ist.

10. Betankungsanlage nach Anspruch 8, in welcher der Container (5; 6) mit Bodemmaterial (107) bedeckt ist.

11. Betankungsanlage nach irgendeinem der anderen Ansprüche 2-10, in welcher der Container mit lösbaren Verbindungen (80a, 80b) versehen ist, um eine Kraftstoffverbindung zwischen dem Tank (10) und/oder der Pump- und Dosiereinheit (20) und dem Abgabemittel (30) durch lösbare Verbindung zu sich dazwischen erstreckenden Kraftstoffleitungen herzustellen.

12. Betankungsanlage nach Anspruch 2, in welcher der Container (105; 106) auf einem Lastkraftwagen (100) aufgestellt ist, und ein einen Tank aufnehmenden Container (105) und ein eine Pump- und Dosiereinheit aufnehmenden Container auf einem Lastkraftwagen (100) aufgestellt sind.

13. Betankungsanlage nach Anspruch 12, in welcher das Dosier- und Abgabemittel in einem separaten, vorzugsweise auf einem separaten Lastkraftwagen aufgestellten Container mit Abmessungen gemäß der ISO Norm aufgenommen ist.

14. Betankungsanlage nach irgendeinem der vorgehenden Ansprüche, in welcher die Pump- und Dosiereinheit eine polygonale, umlaufende Wand (77) hat, worin Schnellkupplungsmittel (79) für die Verbindung mit Kraftstofflinien und Steuerlinien versehen sind, wobei die Verbindungsmittel (79) vorzugsweise innerhalb der Sehnen (78) des Polygons, mit noch mehr Vorzug in Nischen (85), die in den Polygonsehnen gebildet sind, aufgestellt sind.

## Revendications

1. Système de ravitaillement en carburant pour véhicules motorisés tels que des avions, comprenant au moins une cuve de stockage de carburant (10), une unité de pompage et de mesure (20) et au moins un moyen de mesure et d'alimentation en carburant (30), dans lequel l'unité de pompage et de mesure communique en ce qui concerne le carburant avec ladite cuve et ledit moyen de mesure et d'alimentation, ledit système comprenant de plus un moyen de commande pour commander le jet de carburant depuis la cuve vers ledit moyen d'alimentation et depuis ledit moyen d'alimentation vers le véhicule, dans lequel ladite cuve et/ou ladite unité de pompage et de mesure et/ou ledit moyen de mesure et d'alimentation sont placés dans des conteneurs respectifs (5; 6), caractérisé en ce que lesdits conteneurs (5; 6) ont chacun une paroi périphérique (17; 71) et de préférence un fond fermé (16; 72) et ont des dimensions conformes aux normes ISO.

2. Système de ravitaillement en carburant selon la revendication 1, dans lequel ladite cuve (10) et/ou ladite unité de pompage et de mesure (20) et/ou ledit moyen de mesure et d'alimentation (30) sont démontables dudit conteneur respectif (5; 6), de préférence par le dessus.

3. Système de ravitaillement en carburant selon la revendication 1 ou 2, dans lequel ledit système est placé dans le sol (1).

4. Système de ravitaillement en carburant selon les revendications 1 et 3, dans lequel ladite cuve (10) et/ou ladite unité de pompage et de mesure (20) et/ou ledit moyen de mesure et d'alimentation (30) sont placés d'une manière à pouvoir être retirés du sol (1).

5. Système de ravitaillement en carburant selon la revendication 4, dans lequel ladite cuve (10) et/ou ladite unité de pompage et de mesure (20) et/ou ledit moyen de mesure et d'alimentation (30) sont démontables depuis ledit conteneur respectif (5; 6), de préférence depuis le dessus.

6. Système de ravitaillement en carburant selon la revendication 4 ou 5, dans lequel ledit conteneur respectif (5; 6) est placé de manière amovible dans le sol (1).

7. Système de ravitaillement en carburant selon la revendication 4, 5 ou 6, dans lequel ledit conteneur respectif (5; 6) est séparé horizontalement du sol l'entourant par un espace, de préférence périphérique.

8. Système de ravitaillement en carburant selon la revendication 4, 5 ou 6, dans lequel ledit conteneur respectif (5; 6) est entouré de béton (2a) versé dans un espace entre les parois verticales (17; 71) du conteneur et le sol (1).

9. Système de ravitaillement en carburant selon la revendication 7 ou 8, dans lequel ledit conteneur (5; 6) est recouvert d'un pavage amovible, de préférence un pavage de dalles de béton (7).

10. Système de ravitaillement en carburant selon la revendication 8, dans lequel ledit conteneur (5; 6) est recouvert du matériau composant le sol (107).

11. Système de ravitaillement en carburant selon l'une quelconque des revendications 2-10, dans lequel ledit conteneur est équipé de connecteurs déconnectables (80a, 80b) pour établir un passage de carburant entre la cuve (10) et/ou l'unité de pompage et de mesure (20) et le moyen d'alimentation (30) par une connexion déconnectable aux tuyaux de carburant se situant entre eux.

12. Système de ravitaillement en carburant selon la revendication 2, dans lequel ledit conteneur (105; 106) est placé sur un camion (100) et dans lequel, de préférence, un conteneur (105) contenant une cuve et un conteneur (106), logeant une unité de pompage et de mesure et un moyen d'alimentation, sont disposés sur un camion (100).

13. Système de ravitaillement en carburant selon la revendication 12, dans lequel ledit moyen de mesure et d'alimentation est logé dans un conteneur séparé ayant des dimensions conformes aux normes ISO, disposé de préférence sur un camion séparé.

14. Système de ravitaillement en carburant selon l'une quelconque des revendications précédentes, dans lequel ladite unité de pompage et de mesure possède une paroi périphérique polygonale (77) dans laquelle un moyen de couplage à connexion rapide (79) pour relier les tuyaux de carburant et les lignes de commande est prévu, ledit connecteur (79) étant de préférence placé à l'intérieur des côtés (78) du polygone, de préférence encore dans des niches (85) formées dans les côtés du polygone.
